# EUROPEAN PATENT APPLICATION

(11) **EP 4 098 531 A1**
(43) Date of publication of application: **07.12.2022**
(21) Application number: 21275075.6
(22) Date of filing: 02.06.2021
(51) Int. Cl.: B62K 5/10, B62K 5/06, B62K 7/04

(54) **VEHICLE**

(71) Applicant: Pashley Holdings Limited, Stratford-upon-Avon CV37 9NL (GB)
(72) Inventor: Williams, Adrian, Stratford-Upon-Avon, CV37 9NL (GB)
(74) Representative: Dempster, Benjamin John Naftel

(57) **Abstract**

1. The invention provides a vehicle with a tilting part 20 for a pilot and at least one ground engaging wheel 14, the vehicle further comprising a second part 22 carrying at least one ground engaging wheel 16, 18 on each side of the vehicle, connection means 82, 86, 132, 142 connecting the two parts 20, 22 so the tilting part 20 can tilt with respect to the second part 22 so that the pilot can lean into a corner. The vehicle further includes resistance means 162, 180 in the form of one or more helical springs or an elastomeric rising rate cone to resist tilting of the tilting part 20 with respect to the second part 22, the resistance to tilting provided by the resistance means 162, 180 being greater at a greater angle of tilt and greatest at the maximum extent of tilting, wherein the resistance means 162, 180 is such that it provides no resistance to tilting or a first rate of increase of resistance to tilting over a first range from no tilt to a first angle of tilt, and a second rate of increase of resistance to tilting over a second range from the first said angle to a second, greater angle of tilt, the second rate being higher than the first rate.

## Description

The invention relates to a vehicle.

A known vehicle is a delta tricycle with a rigid frame. Riding a tricycle requires a different skillset from riding a bicycle because the rider cannot lean the vehicle into a bend and thereby shift the centre of gravity. For this reason, delta tricycles are slower at cornering than bicycles.

US-A-3504934 relates to a tricycle wheel and frame arrangement. It discloses a delta tricycle with a small internal combustion engine. The tricycle has a main frame which mounts the front ground wheel, handlebars and saddle, and a rear sub-frame assembly which mounts the two rear ground wheels and the engine. The main frame and rear sub-frame assembly are connected through two ball and socket joints so that the main frame can tilt with respect to the rear sub-frame assembly. A stabiliser spring is provided on each side of the front ball and socket joint. When the tricycle is being ridden and negotiating a bend, the rider leans over to the inside of the curve taking over with him the main frame after the manner of riding a bicycle. The tilting of the main frame compresses one of the stabiliser springs which exerts pressure on the rear wheel which is on the inside of the curve or bend and acts to press this wheel against the ground and resists the tendency for this wheel to lift from the ground so the tricycle remains in a stable condition.

According to one aspect of the invention, there is provided a vehicle with a tilting part for a pilot, the tilting part including at least one ground engaging wheel, and the vehicle further comprising a second part carrying at least one ground engaging wheel on each side of the vehicle, connection means connecting the two parts so the tilting part can tilt with respect to the second part so that the pilot can lean into a corner, and resistance means to resist tilting of the tilting part with respect to the second part, the resistance to tilting provided by the resistance means being greater at a greater angle of tilt, wherein the resistance means is such that it provides no resistance to tilting or a first rate of increase of resistance to tilting over a first range from no tilt to a first angle of tilt, and a second rate of increase of resistance to tilting over a second range from the first said angle to a second, greater angle of tilt, the second rate being higher than the first rate.

In this way, the rider can lean the tilting part of the vehicle over when going around a corner. As the rider starts to lean the tilting part over, there is little or no resistance to tilting, and so it feels natural, like riding a bicycle. As the angle of tilt increases into the second range, the resistance to tilting will increase. This will have two effects. It will exert rapidly increasing pressure on the ground engaging wheel of the second part which is on the inside of the corner, to urge that wheel to the ground and keep the second part stable. It will also resist the speed and torque of tilting so that the maximum extent of tilting between the tilting part and the second part is either not reached or is reached at low speed and torque, which is safer for the pilot.

In one embodiment, the resistance means provides no resistance to tilting over a first range from no tilt to a first angle of tilt. The second rate of resistance may be arranged to balance the torque created, while allowing the tilting part to tilt sufficiently to balance the tilting part.

In a further embodiment, the resistance means provides a third rate of increase of resistance to tilting over a third range from the second said angle to a third, greater angle of tilt. This can come at the end of the travel of the tilting part, so that it does not stop abruptly by hitting the second part, but instead the movement of the tilting part is resisted ever more strongly and at a higher rate as the end of tilting travel is approached.

The resistance means may take any suitable form and may comprise at least one resilient biasing means. The resistance means may comprise at least one rising rate biasing means. In one embodiment, the resistance means includes a rising rate elastomer, such as a Moulton (trade mark) cone. In another embodiment, the resistance means comprises leaf spring means.

The second part of the vehicle may carry only two ground engaging wheels. The tilting part of the vehicle may carry only one ground engaging wheel. When both of those features are present, the vehicle is a tricycle or trike.

The tilting part may be in front of or behind the second part, but in a preferred embodiment, the tilting part is in front of the second part. Where the vehicle is a tricycle or trike, this means it is in the delta configuration rather than the tadpole configu ration.

Preferably, none of the wheels on the second part have suspension. The inventors have found that, during cornering, suspension can allow the second part to move so that it tilts away from the inside of the corner providing a moment in the direction of toppling the second part over, which therefore acts against the resistance means. By removing suspension from the wheels on the second part, this tendency is avoided.

The vehicle may be primarily for the pilot, and may have the capacity to carry cargo on the tilting part, but in a preferred embodiment, the second part is arranged to carry cargo. Thus, the second part may carry a container to hold cargo, such as a basket or box.

The vehicle may be powered by an engine, or the vehicle may be at least partly human powered and may include drive means for the pilot to drive at least one of the ground engaging wheels. Thus, the vehicle may include pedals by means of which the pilot can drive at least one of the wheels. The drive means may be arranged to drive at least one of the ground engaging wheels carried by the second part.

The tilting part may be connected to the second part such that the tilting part tilts with respect to the second part about an axis. In a preferred embodiment, the axis is not horizontal. Indeed the axis is preferably tilted downwards towards the tilting part, and may be tilted to intersect where the ground wheel of the tilting part engages the ground, so that the vehicle maintains stability when tilted.

The vehicle may include a drive chain or belt as a continuous loop to transfer drive from one of the second and tilting parts to the other part to drive at least one ground engaging wheel around. The plane of the loop of the drive chain or belt preferably passes substantially through the axis of tilting between the tilting part and the second part. If the plane of the loop is offset from the axis of tilting, then tilting causes a force perpendicular to the plane of the loop which will bias the chain to come off. By arranging the loop so that the axis of tilting is in the plane of the loop, there is no bias towards one side so the chain or belt is more secure.

To achieve this, the vehicle may include two sprockets which are fast with one another side by side, one sprocket carrying the said drive chain or belt and the other sprocket carrying a second chain or belt as a continuous loop to transfer drive from one to the other. A sprocket on a bicycle or tricycle is usually offset from the front to rear plane of substantial symmetry of the vehicle. By using two sprockets, the second sprocket can be placed in the plane of symmetry, which should include the axis of tilting.

According to another aspect of the invention, there is provided a vehicle with a tilting part carrying a seat for a pilot, steering means for the pilot to steer the vehicle, and at least one ground engaging wheel and the vehicle further comprising a second part carrying at least one ground engaging wheel on each side of the vehicle, connection means connecting the two parts so the tilting part can tilt with respect to the second part so that the pilot can lean into a corner, and means to resist tilting of the tilting part with respect to the second part, the resistance to tilting provided by the means being greater at a greater angle of tilt, wherein the means is such that it provides no resistance to tilting or a first rate of increase of resistance to tilting over a first range from no tilt to a first angle of tilt, and a second rate of increase of resistance to tilting over a second range from the first said angle to a second, greater angle of tilt, the second rate being higher than the first rate.

Embodiments of the invention will now be described, by way of example, and with reference to the accompanying drawings, in which:

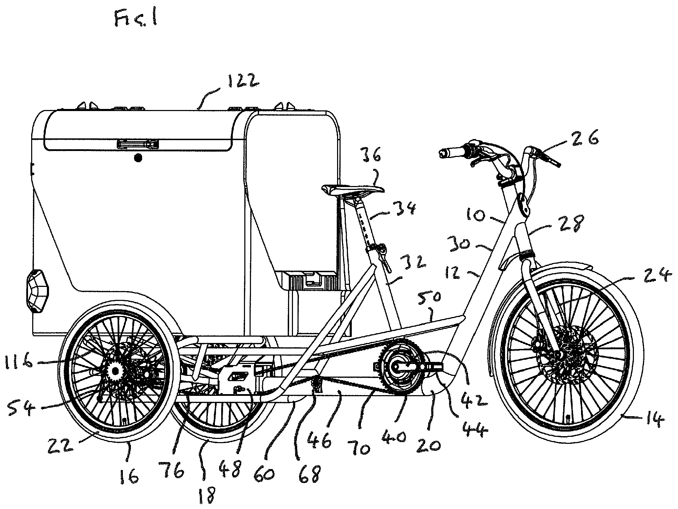

Fig 1 is a front perspective view of the vehicle of the first embodiment of the invention;

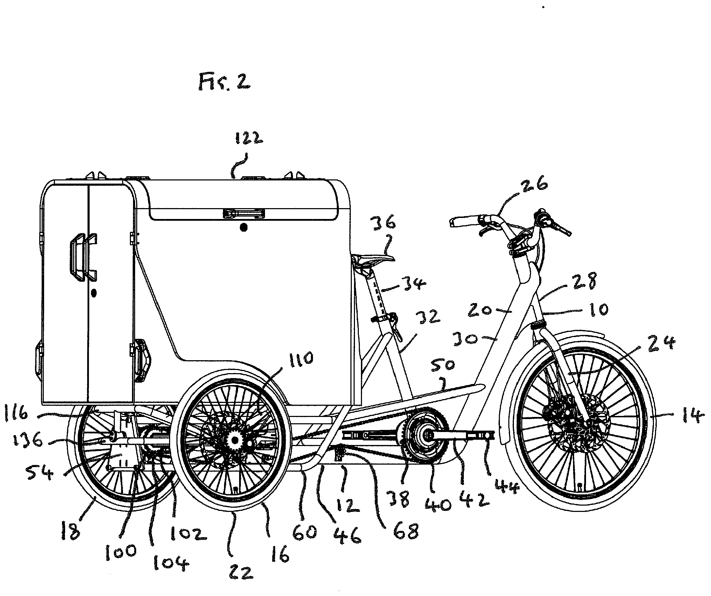

Fig 2 is a rear perspective view of the vehicle of Fig 1;
Fig 3 is a side view of the vehicle of Fig 1 with handlebars, saddle, pedals and cargo container removed for clarity;

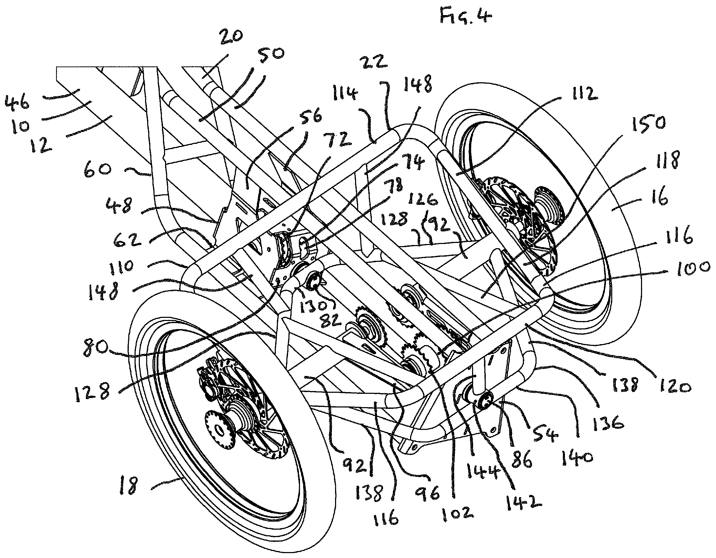

Fig 4 is a perspective view from above of the rear of the vehicle without the cargo container;

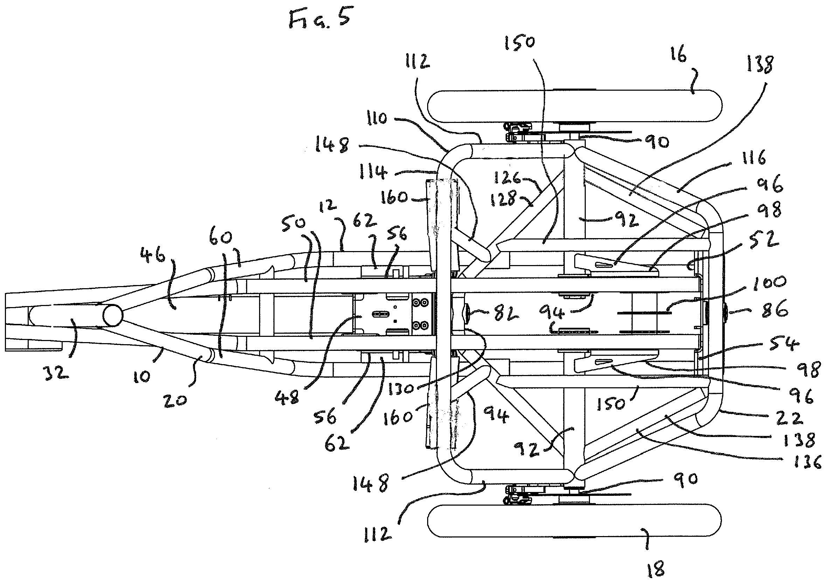

Fig 5 is a top plan view of the rear of the vehicle without the cargo container;

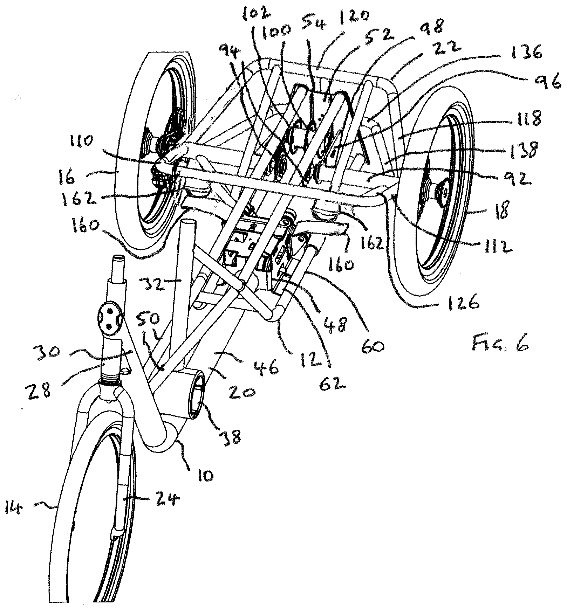

Fig 6 is a front perspective view from above of the vehicle as in Fig 3;
Fig 7 is a front elevation of the vehicle as in Fig 3; and,
Fig 8 is a side view of a suspension cone;
Fig 9 is a side view in cross-section at A-A of the suspension cone of Fig 8;
Fig 10 is a front elevation of a second embodiment; and,
Fig 11 is a front elevation of a third embodiment.

The vehicle of the first embodiment comprises a tricycle 10. The tricycle 10 is in delta form with a frame 12, front wheel 14 and right and left rear wheels 16, 18.

The vehicle 10 comprises two parts, a first, front, tilting part 20, which carries the front wheel 14, and a second, rear part 22 which carries the two rear wheels 16, 18, one on each side. The first part 20 can tilt with respect to the second part 22.

The tilting part 20 comprises front wheel 14, forks 24, handlebars 26, head tube 28, down tube 30, seat tube 32, seat post 34, saddle 36, and bottom bracket 38 mounting the front chain ring 40, cranks 42 and pedals 44. The down tube 30 extends downwardly from the head tube 28 in the usual manner and then diverts to form a spine tube 46 which extends substantially horizontally rearwardly. The rear end of the spine tube 46 mounts a transfer box 48. The bottom bracket 38 is arranged on top of the spine tube 46 and the seat tube 32 extends upwardly from the bottom bracket 38.

The tilting part 20 further comprises two upper tubes 50 which extend rearwardly from around midway down the down tube 30 and pass one on each side of the seat tube 32, beyond the transfer box 48 and on to beyond the rear axles of the rear wheels 16, 18 where their ends are connected to the front face 52 of an upright plate 54. The plate 54 is substantially trapezium shaped, with the shorter parallel side at the top, and the tubes 50 are attached at the two upper corners of the plate 54. The upper tubes 50 are attached to the transfer box 48 by brackets 56.

The tilting part 20 further includes another two tubes 60, which are attached at their forward end to near the top of the seat tube 32. The lower tubes 60 depend downwardly and outwardly from the seat tube 32 and then divert to extend substantially horizontally rearwardly in parallel. The rear ends of the lower tubes 60 are connected to the two lower corners of the plate 54. The lower tubes 60 are attached to the transfer box 48 by brackets 62.

The front chain ring 40 carries a front chain 70 in a continuous loop, and the chain 70 also passes over an outer sprocket 72 mounted in the transfer box 48. The lower part of the front chain loop passes on top of an idler wheel 68 mounted on the side of the spine tube 46. The outer sprocket 72 is fast with a mid line sprocket 74. The mid line sprocket 74 carries a rear chain 76, which exits the transfer box 48 through an upper aperture 78 in the rear face 80 of the transfer box 48 and through the underside of the transfer box 48.

The rear face 80 of the transfer box 48 mounts a front stub axle 82 which extends rearwardly beneath the upper aperture 78.

The plate 54 mounts a rear stub axle 86 which extends rearwardly from the rear face thereof.

The second part 22 carries the right and left rear wheels 16, 18, the axles 90 of which are received in axle tubes 92. The inner end of each axle 90 protrudes out of the axle tube 92 and is fast with a wheel drive sprocket 94, which is coaxial with the axle 90, so that the two wheel drive sprockets 94 face one another and are spaced apart. An arm 96 extends rearwardly from the inner end of each axle tube 92. Between the rear ends 98 of the two arms 96 are mounted three sprockets 100, 102 which are mounted coaxially and fast with one another. The central sprocket 100 receives the rear chain 76 from the transfer box 48. Each outer sprocket 102 carries a chain 104 which connects it to the wheel drive sprocket 94 on that side of the vehicle 10.

The second part 22 further includes an upper, front U shaped tube 110. The tube 110 includes a first portion 112 which extends upwardly and forwardly from the front face of each axle tube 92 adjacent the wheel, and a second portion 114 which extends across above the upper tubes 50. The second part 22 further includes an upper rear U shaped tube 116. The tube 116 includes a first portion 118 which extends upwardly and rearwardly from the rear face of each axle tube 92 adjacent the wheel, and a second portion 120 which extends across so that the second portion 120 and second portion 114 of the upper, front tube 110 are parallel and perpendicular to the front rear plane of substantial symmetry of the tricycle 10, so as to present a substantially horizontal support surface for a large cargo container 122.

The second part 22 further includes a lower, front U shaped tube 126. The tube 126 includes a first portion 128 which extends downwardly and forwardly from the front face of each axle tube 92 inbound of the upper, front tube 110, and a second portion 130 which extends across above the lower tubes 60. Centrally of the second portion 130 and depending from it is a ring 132 which pivotably receives the front stub axle 82 carried by the transfer box 48. The second part 22 further includes a lower, rear U shaped tube 136. The tube 136 includes a first portion 138 which extends rearwardly from the rear face of each axle tube 92 inbound of the upper, rear tube 116, and a second portion 140 which extends across behind the plate 54. Centrally of the second portion 140 is a ring 142 which pivotably receives the rear stub axle 82 carried by the plate 54.

A strut 144 extends from the ring 142 to the second portion 120 of the upper rear tube 116 above it.

A strut 148 is provided on each side from the first portion 128 of the lower, front tube 126 to the second portion 114 of the upper, front tube 110. A further strut 150 is provided on each side from the first portion 128 of the lower, front tube 126 to the second portion 120 of the upper, rear tube 116.

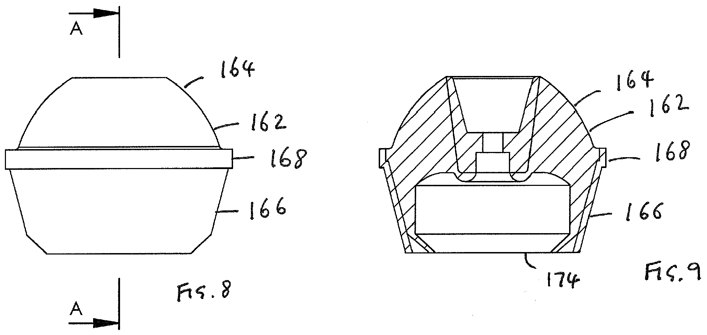

At each side of the transfer box 48, an arm 160 extends outwardly beneath the second portion 114 of the upper front tube 110. On each side, underneath the second portion 114 of the upper front tube 110, close to where it meets the first portion 112, a downwardly facing elastomeric cone 162 is provided. The cone 162 is shown in more detail in Figures 8 and 9. The cone is a Moulton (Trade Mark) cone. The cone 162 in outer shape is broadly hemispherical in its lower part 164 facing downwards, and has a straight sided conical upper part 166 separated from the lower part 164 by an outwards rim 168. The straight sided upper part 166 is received in a downwardly facing cup 170 on the underside of the second portion 114 of the upper front tube 110. The cone 162 has a central bore 174 which tapers downwardly from the upper edge, and then broadens out in the manner of an hourglass shape. The cone 162 acts as a rising rate spring.

In use, the pilot sits on the saddle 36 and pushes the pedals 44 with their feet in the usual way to drive the tricycle 10 along. Rotating the pedals 44 rotates the chain ring 40 which drives the front chain 70. The front chain 70 drives the outer sprocket 72 mounted in the transfer box 48. The outer sprocket 72 is fast with the mid line sprocket 74, which is therefore driven thereby. The mid line sprocket 74 drives the rear chain 76, which in turn drives the central sprocket 100. The central sprocket 100 is fast with and hence drives the two outer sprockets 102. The outer sprockets 102 carry chains 104 to the wheel drive sprockets 94. Each wheel drive sprocket 94 is fast with the axle 90 on that side which drives the wheel 16, 18 on that side, so that the tricycle 10 is driven forwards. Both rear wheels 16, 18 of the tricycle 10 are thus driven.

Through the engagement of the rear wheels 16, 18 with the ground, the second part 22 remains stable with the wheel axles 90 and axle tubes 92 parallel to the ground. Through the front and rear stub axles 82, 86, and the rings 132, 142 the whole of the front part 20 can tilt with respect to the second part 22, and hence in relation to the ground. The front and rear stub axles 82, 86, and the rings 132, 142 constitute the aforesaid "connection means".

In this way, the pilot, sitting on the saddle, can keep the front part 20 of the tricycle 10 upright on flat ground, or if there is an adverse camber, in which case the second part 22 may tilt and the front part 20 stay upright. When the pilot goes around a corner on the tricycle 10, he can lean into the corner and the front part 20 of the tricycle 10 will pivot around the stub axles 82, 86 to lean over.

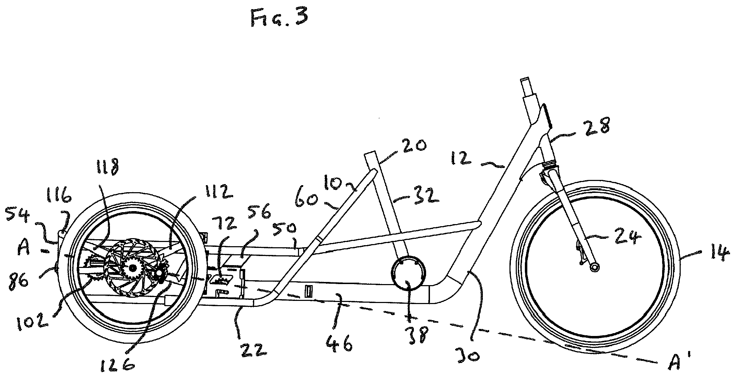

The stub axles 82, 86 are aligned so that the axis of tilting is not horizontal but instead is directed down towards the front of the tricycle, as shown in at A-A' in Fig 3, to intersect with the region of the front wheel 14 which is in contact with the ground. In this way, the tricycle 10 can tilt freely. If the axis were horizontal, for example, the front of the rear part 22 would be pivoted down when the front part 20 tilted over, and depending on the balance of the rear part 22, this would create a bias towards or against tilting. By angling the tilt axis A-A' in this way, the rear part 22 is unaffected by tilting of the front part 20.

Returning to the chains, only the rear chain 76 spans the tilting part 20 and the second part 22. The rear chain 76 passes over the mid line sprocket 74 and the central sprocket 100. The rotational axes of both the mid line sprocket 74 and the central sprocket 100 lie on the axis of tilting A-A'. In this way, during tilting, sideways forces on the rear chain 76 acting to pull the chain of the sprockets will be balanced and minimised to minimise the risk of the rear chain 76 coming off one of the sprockets 74, 100.

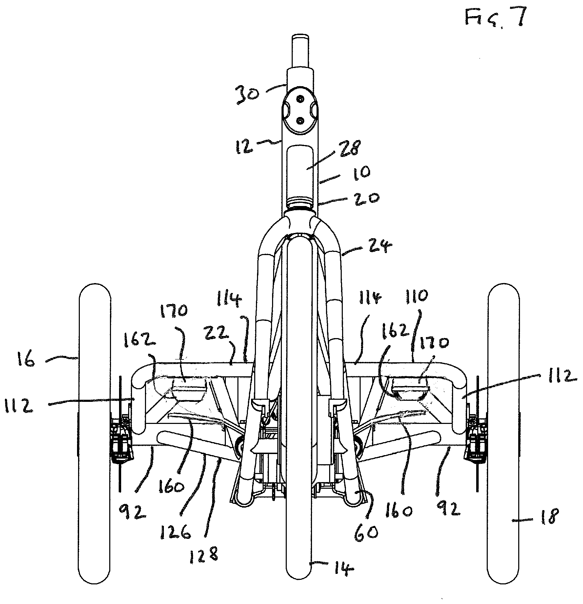

There is a limit to how far the tilting part 20 of the tricycle 10 can tilt with respect to the second part 22. Eventually, the first portion 128 of the lower, front U shaped tube 126 will come into contact with the second tube 60. To prevent this happening abruptly, the arm 160 and elastomeric cone 162 provide resistance. As seen for example in Fig 7, when the tilting part 20 is upright and the tricycle 10 is on level ground, there is a gap between each arm 160 and each cone 162. Thus, over the first section of travel of the tilting part 20 as it starts to tilt over, there is no resistance from the arm 160 and cone 162 as there is no interaction between them. Once the tilting part 20 tilts over so far that one arm 160 meets the cone 162 on that side, the cone 162 will provide a rising rate of resistance. A normal spring will provide a steadily increasing resistance in accordance with Hooke's Law, so the rate of increase of resistance is constant. The Moulton (trade mark) cone 162 provides a rising rate of resistance, so the rate of increase of resistance with compression is not constant but is increasing. In this way the tilting of the front part 20 is resisted with increasing force by the cone 162 to slow the speed of tilting as the limit is reached and thereby provide control.

It will be noted that, as the pilot leans the front part 20 of the tricycle 10 over to go around a corner, the interaction between the arm 160 and cone 162 provides a torque in the direction to push the rear wheel 16, 18 on the inside of the corner to the ground, thus resisting tendency in tricycles for the inside wheel to lift in cornering, and also resisting torque from a load in the cargo container 122 in the direction to topple over the second part 22 to the outside of the corner. The arms 160 and cones 162 therefore increase the safety of the tricycle 10.

When the pilot initially leans the tilting part 20, there is no resistance until the arm 160 engages the cone 162. This gives a natural feel to cornering, like riding a bicycle. The arm 160 engages the cone 162 at a tilting angle of 20 degrees, and the maximum tilt angle is 24 degrees in this embodiment.

It is noted that the tricycle 10 does not include suspension for any of the wheels 14, 16, 18. Suspension would allow the second part 22 to lean outwards during cornering, which is undesirable. The seat post 34 may be a suspension seat post if more comfort is required for the pilot.

The tricycle is a narrow tilting vehicle. The tricycle 10 is 780mm wide, and hence can fit comfortably into current cycling infrastructure, and two such tricycles 10 can be parked side by side in the parking space for one car.

The tricycle 10 could include a basket or other means of carrying items on the front, for example in front of the handlebars, in known manner.

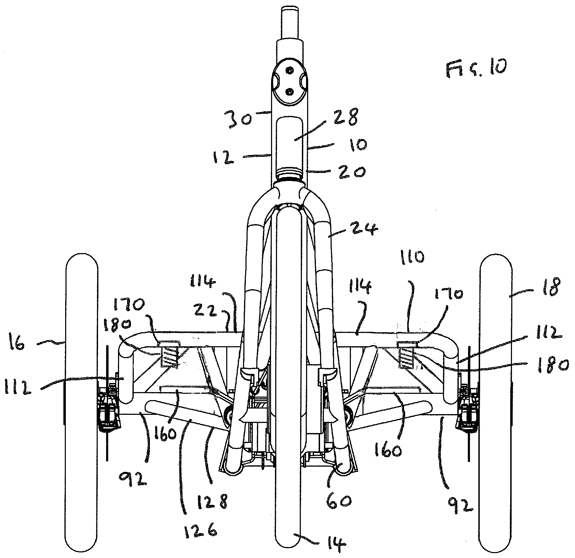

Fig 10 shows another embodiment. The only difference between the first and second embodiments is that in the second embodiment, each Moulton (trade mark) cone 162 has been replaced by a helical compression spring 180, the axis of the helical spring 180 facing downwards. As before, initial tilting of the tilting part 20 is not resisted, but when the arm 160 engages the end of the helical compression spring 180, it will begin to compress it, and the spring 180 will create a steadily increasing resistance. The arm 160 engages the end of the spring 180 at a tilt angle of 12 degrees and the maximum tilt angle is 24 degrees.

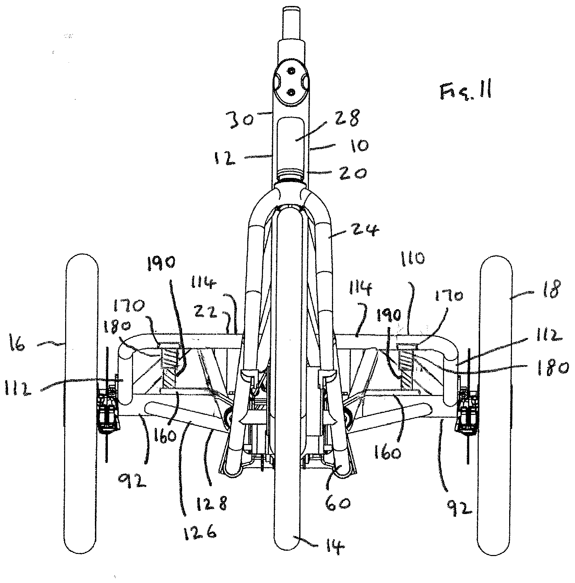

Fig 11 shows a further embodiment. The only difference between the third embodiment and the second embodiment is that in the third embodiment there is a second helical compression spring 190 between the end of the first helical compression spring 180 and the arm 160 on each side. The second helical compression spring 190 has a lower spring rate than the first helical compression spring 180. In this way, as the tilting part 20 starts to tilt, it will be resisted by the second compression spring 190. As the angle increases, the first compression spring 180 will start to be compressed as well and so the rate of resistance to tilting will increase.

In an alternative embodiment, the cargo container 122 is smaller, and may be used for touring equipment or just for carrying shopping. Indeed, in a further embodiment, the cargo container 122 may be omitted, and the tricycle used primarily as transport for the pilot.

The tricycle 10 may include an e-assist electric motor. In another embodiment, the tricycle may include a motor, such as an electric motor or internal combustion engine, and may not have pedals.

In an alternative embodiment, the trike may be a tadpole trike, with the two wheeled part at the front, and the tilting part at the back.

In an alternative embodiment, the tilting part may have two wheels, one on each side, but arranged to move up and down with respect to each other so that when the tilting part is tilted over, they both remain in contact with the ground.

## Claims

1. A vehicle with a tilting part for a pilot, the tilting part including at least one ground engaging wheel, the vehicle further comprising a second part carrying at least one ground engaging wheel on each side of the vehicle, connection means connecting the two parts so the tilting part can tilt with respect to the second part so that the pilot can lean into a corner, and resistance means to resist tilting of the tilting part with respect to the second part, the resistance to tilting provided by the resistance means being greater at a greater angle of tilt and greatest at the maximum extent of tilting, wherein the resistance means is such that it provides no resistance to tilting or a first rate of increase of resistance to tilting over a first range from no tilt to a first angle of tilt, and a second rate of increase of resistance to tilting over a second range from the first said angle to a second, greater angle of tilt, the second rate being higher than the first rate.

2. A vehicle as claimed in claim 1, wherein the resistance means provides no resistance to tilting over a first range from no tilt to a first angle of tilt.

3. A vehicle as claimed in claim 1 or claim 2, wherein the resistance means provides a third rate of increase of resistance to tilting over a third range from the second said angle to a third, greater angle of tilt.

4. A vehicle as claimed in any preceding claim, wherein the resistance means comprises at least one resilient biasing means.

5. A vehicle as claimed in any preceding claim, wherein the resistance means comprises at least one rising rate biasing means.

6. A vehicle as claimed in claim 5, wherein the resistance means includes a rising rate elastomer.

7. A vehicle as claimed in claim 6, wherein the resistance means includes a Moulton (trade mark) cone.

8. A vehicle as claimed in any preceding claim, wherein the second part carries only two ground engaging wheels, and/or optionally wherein the tilting part carries only one ground engaging wheel, and/or optionally wherein the tilting part is in front of the second part.

9. A vehicle as claimed in any preceding claim, wherein none of the wheels on the second part have suspension.

10. A vehicle as claimed in any preceding claim, wherein the second part is arranged to carry cargo, and may carry a container to hold cargo.

11. A vehicle as claimed in any preceding claim, wherein the vehicle is at least partly human powered and includes drive means for the pilot to drive at least one of the ground engaging wheels, and optionally wherein the tilting part of the vehicle includes pedals by means of which the pilot can drive at least one of the wheels, and optionally wherein the drive means is arranged to drive at least one of the ground engaging wheels carried by the second part.

12. A vehicle as claimed in any preceding claim, wherein the tilting part is connected to the second part such that the tilting part tilts with respect to the second part about an axis, and optionally wherein the axis is not horizontal, and optionally wherein the axis is angled downwards to intersect where the ground wheel of the tilting part engages the ground.

13. A vehicle as claimed in claim 11 or claim 12, wherein the vehicle includes a drive chain or belt as a continuous loop to transfer drive from one of the second and tilting parts to the other part to drive at least one ground engaging wheel around, and optionally wherein the axis of tilting between the tilting part and the second part lies substantially in the plane of the loop of the drive chain or belt, and optionally wherein the vehicle includes two sprockets which are fast with one another side by side, one sprocket carrying the said drive chain or belt and the other sprocket carrying a second chain or belt as a continuous loop to transfer drive from one to the other.

14. A vehicle with a tilting part for a pilot, the tilting part including at least one ground engaging wheel, the vehicle further comprising a second part carrying at least one ground engaging wheel, connection means connecting the two parts so the tilting part can tilt with respect to the second part so that the pilot can lean into a corner, the tilting part tilting about an axis, the vehicle including a drive chain or belt as a continuous loop to transfer drive from one of the second and tilting parts to the other part to drive at least one ground engaging wheel around, wherein the axis of tilting between the tilting part and the second part lies substantially in the plane of the loop of the drive chain or belt.

15. A vehicle as claimed in claim 14, wherein the vehicle includes two sprockets which are fast with one another side by side, one sprocket carrying the said drive chain or belt and the other sprocket carrying a second chain or belt as a continuous loop to transfer drive from one to the other.
